# EUROPÄISCHE PATENTSCHRIFT

(11) **EP 2 814 014 B1**
(45) Veröffentlichungstag und Bekanntmachung des Hinweises auf die Patenterteilung: **07.09.2016**
(21) Anmeldenummer: 14001626.2
(22) Anmeldetag: 08.05.2014
(51) Int. Cl.: G06K 9/00, G08G 1/01, G08G 1/16, G08G 1/04

(54) **Verfahren zur Koordination des Betriebs von Kraftfahrzeugen**
Method for coordinating the operation of motor vehicles
Procédé de coordination du fonctionnement de véhicules automobiles

(30) Priorität: 13.06.2013 DE 102013009860
(43) Veröffentlichungstag der Anmeldung: 17.12.2014
(73) Patentinhaber: AUDI AG, 85045 Ingolstadt (DE)
(72) Erfinder: Buchholz, Jan, DE - 84030 Ergolding (DE); Lorenz, Stephan, DE - 80939 München (DE)
(74) Vertreter: Thielmann, Frank

(56) Entgegenhaltungen:
- EP-A1- 2 164 059
- EP-A1- 2 447 928
- WO-A2-2012/145761
- DE-A1-102006 046 697
- DE-A1-102007 058 538
- DE-A1-102008 030 550
- DE-A1-102012 203 182
- DE-A1-102012 203 673
- DE-A1-102012 218 935
- US-A1- 2010 100 324
- US-B2- 7 899 621

## Beschreibung

Die Erfindung betrifft ein Verfahren zur Koordination des Betriebs wenigstens eines ersten und eines zweiten Kraftfahrzeugs durch wenigstens eine Koordinationseinrichtung.

Bei der Entwicklung moderner Kraftfahrzeuge werden zunehmend Fahrassistenzsysteme wichtiger, die den Fahrer bei einer Kollisionsvermeidung unterstützen. Diese Systeme sind teilweise als reine Hinweissysteme ausgebildet, also als Systeme, die einem Fahrer bei einer drohenden Kollision optische und/oder akustische Hinweise geben können. Es sind aber auch Systeme bekannt, die automatische Ausweichvorgänge, ein automatische Bremsen oder Ähnliches einleiten können.

Bekannte Systeme ermitteln dabei jeweils mögliche Ausweichtrajektorien aus den in einem Kraftfahrzeug zur Verfügung stehenden Sensorinformationen. Sind mehrere Kraftfahrzeuge an einer kritischen Situation beteiligt, so wird durch jedes Kraftfahrzeug einzeln eine vorgeschlagene oder automatisch ausgeführte Trajektorie bestimmt. Bei einer solchen getrennten Ermittlung der Trajektorie für jedes einzelne Kraftfahrzeug kann jedoch eine Anpassung der Trajektorien der weiteren am Konflikt beteiligten Kraftfahrzeuge nicht berücksichtig werden und damit kann häufig keine optimale Auflösung der Konfliktsituation erreicht werden.

Der Erfindung liegt damit die Aufgabe zugrunde, eine bessere Auflösung von Konflikten im Straßenverkehr durch die Koordination von Kraftfahrzeugen zu erreichen.

Die Aufgabe wird erfindungsgemäß durch ein Verfahren der eingangs genannten Art gelöst, wobei die Koordinationseinrichtung eine ortsgebundene Infrastruktureinrichtung oder Teil eines dritten Kraftfahrzeugs ist und wenigstens einen Sensor, eine Recheneinrichtung und eine Kommunikationseinrichtung umfasst, das die folgenden Schritte umfasst:
- Aufnahme von Sensordaten mit dem Sensor der Koordinationseinrichtung,
- Ermittlung von Orts- und Bewegungsinformationen des ersten und des zweiten Kraftfahrzeugs unter Verwendung der Sensordaten durch die Recheneinrichtung,
- Berechnung wenigstens einer voraussichtlichen Trajektorie für das erste und das zweite Kraftfahrzeug unter Verwendung der jeweiligen Orts- und Bewegungsinformationen durch die Recheneinrichtung,
- Überprüfen der Trajektorien auf Konflikte, die aufgrund einer räumlichen und zeitlichen Überlappung der Trajektorie des ersten Kraftfahrzeugs mit der Trajektorie des zweiten Kraftfahrzeug auftreten, durch die Recheneinrichtung,
- Ermittlung einer Fahranweisung für das erste und/oder das zweite Kraftfahrzeug durch die Recheneinrichtung, falls das Vorliegen eines Konflikts ermittelt wurde,
- Übermittlung der Fahranweisung an das erste und/oder zweite Kraftfahrzeug durch die Kommunikationseinrichtung, und Ausführen der empfangenen Fahranweisung durch das erste und/oder das zweite Kraftfahrzeug und/oder Anzeige der empfangenen Fahranweisung auf einer Anzeigeeinrichtung des ersten und/oder zweiten Kraftfahrzeugs.

Die Erfindung beruht auf der Idee, dass bei Auftreten eines Konflikts zwischen den Trajektorien von Kraftfahrzeugen eine Anpassung wenigstens einer Trajektorie durch eine dritte, neutrale Instanz, also weder das erste noch das zweite Kraftfahrzeug, erfolgen soll. Insbesondere soll eine solche dritte, neutrale Instanz das Verkehrsgeschehen stets beobachten, potentielle Konflikte zwischen den Trajektorien von Kraftfahrzeugen erkennen und diese quasi als "Schiedsrichter" lösen.

Die Koordinationseinrichtung, also die neutrale dritte Einrichtung, die Konflikte erkennt und löst, kann insbesondere eine ortsgebundene Infrastruktureinrichtung sein. In diesem Fall kann die Koordinationseinrichtung auch aus mehreren örtlich beabstandeten Komponenten bestehen. So sind an zahlreichen Kreuzungen und weiteren Punkten, an denen häufig problematische Fahrsituationen entstehen, ohnehin Kameras und weitere Sensoren vorhanden. Eine Koordinationseinrichtung kann nun dadurch gebildet werden, dass eine oder mehrere dieser Kameras über eine Kommunikationsverbindung mit einer Recheneinrichtung in Verbindung stehen, die die Daten der Kamera oder der Kameras analysiert, Fahrzeuge in den Daten erkennt, potentielle Trajektorien der Kraftfahrzeuge berechnet und sie auf Konflikte überprüft und bei Auftreten eines Konflikts zwischen den Trajektorien wenigstens einem der Kraftfahrzeuge mit Hilfe einer Kommunikationseinrichtung eine Fahranweisung übermittelt, mit der drohende Konflikte vermieden werden können.

Solche Fahranweisungen können einfache, insbesondere längsführende Eingriffe beschreibende oder querführende Eingriffe beschreibende Fahranweisungen sein. So kann als Fahranweisung an ein Kraftfahrzeug beispielsweise eine Aufforderung zum Bremsen, Beschleunigen oder links oder rechts Lenken übermittelt werden. Die Fahranweisung kann auch präziser sein, beispielsweise kann eine Anweisung wie Abbremsen um 3 km/h oder für 3 Sekunden mit einer Beschleunigung von 2 m/s² beschleunigen übertragen werden. Die Fahranweisung kann jedoch auch eine vollständige Trajektorie mit Brems- und Lenkeingriffen zu verschiedenen Zeitpunkten oder Ähnliches umfassen. Durch die Fahranweisung wird die Trajektorie wenigstens eines der Kraftfahrzeuge derart angepasst, dass Konflikte zwischen den Trajektorien der Kraftfahrzeuge soweit möglich vermieden werden. Verfahren zur Vermeidung von Trajektorienkonflikten und Pfadfindungsalgorithmen sind im Stand der Technik bekannt und sollen daher nicht näher erläutert werden.

Ist ein Konflikt zwischen den Trajektorien zum Zeitpunkt der Ermittlung der Fahranweisung nicht vermeidbar, so ist es auch möglich, dass die Koordinationseinrichtung Fahranweisungen für die Kraftfahrzeuge bestimmt, die Kollisionsfolgen einer unvermeidbaren Kollision, insbesondere Personenschäden, minimieren. Auch zur Ermittlung von Fahranweisungen bei solchen Strategien sind im Stand der Technik zahlreiche Verfahren bekannt.

Alternativ zur Ausbildung als Infrastruktureinrichtung kann die Koordinationseinrichtung auch Teil eines dritten Kraftfahrzeugs sein. Die Nutzung eines dritten Kraftfahrzeugs als Koordinationseinrichtung ist vorteilhaft, da das erfindungsgemäße Verfahren in diesen Fällen auch an Orten genutzt werden kann, an denen keine ortsgebundenen Infrastruktureinrichtungen als Koordinationseinrichtungen zur Verfügung stehen. Wesentlich ist, dass durch die Wahl eines dritten Kraftfahrzeugs und damit eines an einer Konfliktsituation nicht beteiligten Kraftfahrzeugs erreicht wird, dass weiterhin eine neutrale Instanz als "Schiedsrichter" zur Verfügung steht.

In dem erfindungsgemäßen Verfahren werden durch die Koordinationseinrichtung zunächst Sensordaten aufgenommen. Wie bereits erwähnt, können dies insbesondere Kameradaten sein, es sind aber auch beispielsweise Wärmedaten, Daten von Ultraschallabstandssensoren, Radarsensoren oder Ähnliches nutzbar. Es ist möglich, dass eine Koordinationseinrichtung nur einen Sensor aufweist, es können aber auch mehrere gleichartige oder verschiedenartige Sensoren vorhanden sein. Wie bereits erläutert, können die verschiedenen Sensoren, die einer Koordinationseinrichtung zugeordnet sind, auch örtlich beabstandet sein. So kann eine Koordinationseinrichtung beispielsweise auf mehrere Kameras Zugriff haben, die alle eine Kreuzung abbilden oder Ähnliches.

Aus den Sensordaten, die insbesondere Bilddaten sein können, wird anschließend in der Recheneinrichtung eine Orts- und Bewegungsinformation zumindest eines ersten und eines zweiten Kraftfahrzeugs bestimmt. Das erste und das zweite Kraftfahrzeug können insbesondere durch Bilderkennungsalgorithmen erkannt werden. Es können auch Informationen erkannt werden, die eine Kommunikation mit dem erkannten Kraftfahrzeug ermöglichen. Im erfindungsgemäßen Verfahren ist es notwendig, dass Fahrempfehlungen gezielt an ein bestimmtes Kraftfahrzeug übertragen werden. Dies ist leicht möglich, wenn eine beidseitige Kommunikation zwischen Kraftfahrzeug und Koordinationseinrichtung genutzt wird, da in diesem Fall beispielsweise eine Zuordnung eines Kommunikationsmerkmals zu einem erkannten Fahrzeug über eine ausgetauschte Ortsinformation möglich ist.

Erfolgt keine beidseitige Kommunikation, so muss eine Kommunikation aufgrund von Daten aus weiteren Quellen, wie beispielsweise aus automatischen Mautsystemen oder Ähnlichem, oder den gewonnenen Sensordaten möglich sein. Dies ist beispielsweise durch Erkennung eines Nummernschilds, eines Strich- oder QR-Codes oder Ähnlichem, insbesondere in Verbindung mit einem Zugriff auf eine Fahrzeugdatenbank möglich.

Selbstverständlich können Fahranweisungen auch an alle Kraftfahrzeuge übertragen werden, jedoch zusätzlich mit einer Markierung versehen werden, die es dem einzelnen Kraftfahrzeug ermöglicht zu erkennen, ob die Fahranweisung für dieses Kraftfahrzeug gültig ist. So kann beispielsweise bei einer ortsfesten Koordinationseinrichtung aus einer Bildaufnahme eine Positionsinformation gewonnen werden und die Positionsinformation mit der Fahranweisung übertragen werden. Positionsinformationen können anschließend durch das Kraftfahrzeug mit im Kraftfahrzeug vorhandenen Positionsdaten verglichen werden, wodurch das Kraftfahrzeug erkennen kann, ob die Fahranweisung für dieses Kraftfahrzeug bestimmt ist. Ähnliche Identifikationsdaten können auch bei erkanntem Nummernschild, erkanntem Fahrzeugtyp, erkannter Fahrzeugfarbe, einem Erkennen der Fahrzeugumgebung oder der Fahrtrichtung oder Ähnlichem übertragen werden.

Aus der Orts- und Bewegungsinformation der erkannten und vorteilhafterweise auch identifizierten Kraftfahrzeuge wird anschließend für jedes der Kraftfahrzeuge eine Trajektorie bestimmt. Die Trajektorie kann im einfachsten Fall dadurch bestimmt werden, dass davon ausgegangen wird, dass sich das Kraftfahrzeug mit einer konstanten Geschwindigkeit weiterhin in die gleiche Richtung bewegt. Während eine solche Bestimmung der Trajektorie für sehr kurze Zeiträume ausreichend sein kann, ist es für längere Zeiträume vorteilhaft, zusätzliche Informationen zur Ermittlung der Trajektorie zu nutzen. Als zusätzliche Information kann beispielsweise eine vorangehende Bewegung des Kraftfahrzeugs genutzt werden. Es können aber auch aktive Blinker des Kraftfahrzeugs oder die Reifenstellung des Kraftfahrzeugs erkannt werden. Daneben können zur Berechnung der Trajektorie eines einzelnen Kraftfahrzeugs selbstverständlich Umgebungsinformationen und Trajektorien anderer Kraftfahrzeuge mitgenutzt werden. So kann zumindest für zeitlich entfernte Teile der Trajektorie zunächst davon ausgegangen werden, dass Kraftfahrzeuge erkennbare Hindernisse und Kollisionen vermeiden.

Die direkt aus den aktuellen und vorangehenden Informationen gewonnenen Informationen können durch Informationen über den typischen Verkehrsfluss an der beobachteten Stelle ergänzt werden. So kann es orts- und zeitabhängig sehr viel wahrscheinlicher sein, dass ein Kraftfahrzeug in eine Richtung abbiegt, als dass es in eine andere Richtung abbiegt oder Ähnliches. Es ist zudem insbesondere vorteilhaft, wenn die Kraftfahrzeuge über ein Kommunikationsprotokoll, beispielsweise ein Car2x- oder Car2Car-Protokoll weitere Informationen bereitstellen. Es kann ein Kraftfahrzeug insbesondere Informationen über geplante Fahrmanöver bereitstellen, es ist aber auch möglich, dass ausschließlich oder ergänzend Fahrzeugparameter wie ein Lenkwinkel, eine Stellung eines Brems- oder Gaspedals oder Ähnliches übermittelt werden.

Unter Nutzung der vorhandenen Informationen können ein oder mehrere Trajektorien für jedes der Kraftfahrzeuge bestimmt werden. Bei der Bestimmung mehrerer Trajektorien können insbesondere Wahrscheinlichkeiten ermittelt werden, dass diese Trajektorie tatsächlich ausgeführt wird. Sind nun für jedes Kraftfahrzeug ein oder mehrere Trajektorien ermittelt, so kann in einem folgenden Schritt überprüft werden, ob zwischen Trajektorien des ersten und des zweiten Kraftfahrzeugs ein Konflikt, d. h. eine räumliche oder zeitliche Überlappung der Trajektorien, auftritt. Wird ein solcher Konflikt der Trajektorien erkannt, so weist dies auf eine drohende Kollision der Kraftfahrzeuge hin. Es ist also vorteilhaft, wenigstens einem der Kraftfahrzeuge eine Fahranweisung zu übermitteln, die zu einer Vermeidung dieses Konflikts führt. Einschränkend können nur Konflikte zwischen Trajektorien berücksichtigt werden, die eine gewisse Mindestwahrscheinlichkeit aufweisen oder es können Konflikte zunächst nicht berücksichtigt werden, die sehr weit in der Zukunft liegen. In beiden Fällen wird der Konflikt höchstwahrscheinlich durch den Fahrer oder ein Fahrassistenzsystem selbstständig vermieden. Selbstverständlich können Kraftfahrzeuge, deren Trajektorien einen solchen unwahrscheinlichen oder zeitlich fernen Konflikt aufweisen, weiter gesondert beobachtet werden, um bei einem drohenden Eintritt eines Konflikts rechtzeitig eingreifen zu können.

In allen anderen Fällen, in denen ein Konflikt ermittelt wird, wird eine Fahranweisung für das erste und/oder das zweite Kraftfahrzeug ermittelt, die anschließend an diese Kraftfahrzeuge übertragen wird. Wesentlich ist hier, dass eine einzige Koordinationseinrichtung die Kontrolle über die Anpassung der Trajektorien beider Kraftfahrzeuge hat. So können die Trajektorien beider Kraftfahrzeuge durch eine einzelne Koordinationseinrichtung angepasst werden oder die Koordinationseinrichtung kann erkennen, dass die Anpassung einer der Trajektorien der Kraftfahrzeuge ausreichend ist.

Entgegen einem üblichen Verfahren, bei dem Trajektorienkorrekturen für Kraftfahrzeuge in potentiellen Konfliktsituationen einzeln berechnet werden, ist es in diesem Fall nicht möglich, dass sich die Trajektorienkorrekturen der Kraftfahrzeuge gegenseitig aufheben oder stören. Die weitere Nutzung der an das erste und/oder zweite Kraftfahrzeug übertragenen Fahranweisung hängt stark vom Automatisierungsgrad des Fahrens des jeweiligen Kraftfahrzeugs ab. So kann bei einem nicht automatisierten Fahren in einem Kraftfahrzeug ein Hinweis an den Fahrer gegeben werden, wie eine drohende Konfliktsituation vermieden werden kann. Es kann eine Sprachansage wie "Bitte bremsen Sie" ausgegeben werden oder es kann ein blinkender Pfeil, der eine Ausweichrichtung anzeigt, auf einer Anzeigeeinrichtung ausgegeben werden. Selbstverständlich können neben optischen und akustischen Hinweisen auch haptische Hinweise gegeben werden, wie ein Vibrieren des Fahrzeugsitzes, um den Fahrer auf eine Gefahrensituation aufmerksam zu machen oder eine gezielte Erschütterung von Teilen des Lenkrads, um auf einen notwendigen Lenkeingriff hinzuweisen oder eine Vibration des Brems- oder Gaspedals, um eine notwendige Beschleunigung oder ein notwendiges Bremsen anzuzeigen. Alternativ können die empfangenen Fahranweisungen auch direkt durch das erste und/oder das zweite Kraftfahrzeug ausgeführt werden. So kann die Steuereinrichtung des Kraftfahrzeugs dazu ausgebildet sein, direkt in die Längs- oder Querführung des Kraftfahrzeugs einzugreifen und damit eine Korrektur der Fahrzeugtrajektorie durchzuführen. Ein solcher direkter Eingriff in die Führung des Kraftfahrzeugs ist insbesondere dann möglich, wenn das Kraftfahrzeug sich bereits in einem voll- oder teilautomatischen Fahrmodus befindet. Unter Umständen kann ein solcher Eingriff aber auch aus einem manuellen Fahren heraus erfolgen.

Insbesondere beim manuellen Fahren ist es möglich, dass die empfangene Fahranweisung auch eine Anweisung darüber enthalten kann, ob ausschließlich ein Hinweis an den Fahrer gegeben werden soll oder ob direkt in die Längs- oder Querführung des Kraftfahrzeugs eingegriffen werden soll. So kann insbesondere bei einem weit in der Zukunft liegenden Konflikt zunächst ein Hinweis an den Fahrer des Kraftfahrzeugs gegeben werden, dass dieser beispielsweise bremsen oder ausweichen soll und nur bei akut bevorstehenden Konflikten aktiv in die Längsführung eingegriffen werden, beispielsweise durch ein Aktivieren der Bremsen.

Es ist möglich, dass das erste und das zweite Kraftfahrzeug gleichzeitig von den Sensoren mehrerer Koordinationseinrichtungen erfasst werden. Wie erwähnt, ist es im erfindungsgemäßen Verfahren wesentlich, dass ausschließlich eine Koordinationseinrichtung Fahranweisungen an das erste und/oder das zweite Kraftfahrzeug übermittelt. Daher ist es vorteilhaft, wenn bei Erfassung des ersten und zweiten Kraftfahrzeugs durch die Sensoren von wenigstens zwei der Koordinationseinrichtungen in einem weiteren Schritt vor Ermittlung einer Fahranweisung eine der Koordinationseinrichtungen durch die Recheneinrichtung wenigstens einer Koordinationseinrichtung oder durch die Steuereinrichtungen des ersten und/oder des zweiten Kraftfahrzeugs ausgewählt wird und ausschließlich die Recheneinrichtung der ausgewählten Koordinationseinrichtung die Fahranweisung ermittelt. Die Tatsache, dass das erste und zweite Kraftfahrzeug durch wenigstens zwei Koordinationseinrichtungen erkannt wurde, kann beispielsweise festgestellt werden, indem ein Datenaustausch zwischen allen Koordinationseinrichtungen erfolgt, die einen überlappenden Sensorbereich aufweisen. Insbesondere ist es möglich, dass eine Koordinationseinrichtung die Erkennung mehrerer Fahrzeuge genau dann an eine oder mehrere Koordinationseinrichtungen übermittelt, wenn sich wenigstens zwei der erkannten Fahrzeuge in einem Bereich aufhalten, der auch von Sensoren der zweiten Koordinationseinrichtung erfasst wird.

Der tatsächliche Zeitpunkt des Schritts im Verfahren kann flexibel gewählt werden. So kann sofort nach Aufnahme der Sensordaten festgestellt werden, dass das erste und zweite Kraftfahrzeug von den Sensoren der wenigstens zwei Koordinationseinrichtungen erfasst wurden. Erfolgt bereits zu diesem Zeitpunkt die Auswahl der Koordinationseinrichtung, die im weiteren Verlauf des Verfahrens die Fahranweisung an die Kraftfahrzeuge übermitteln soll, so ist es möglich, dass die weiteren Schritte ausschließlich von dieser Koordinationseinrichtung durchgeführt werden.

Alternativ ist es selbstverständlich auch möglich, dass zunächst zumindest einige der weiteren Schritte des Verfahrens von mehreren der Koordinationseinrichtungen durchgeführt werden können. Dies kann insbesondere dann vorteilhaft sein, wenn den Koordinationseinrichtungen aufgrund unterschiedlicher Sensorpositionen oder anderer Unterschiede der Koordinationseinrichtungen unterschiedliche Informationen zur Verfügung stehen. In diesem Fall können beispielsweise mehrere Koordinationseinrichtungen Orts- und Bewegungsinformationen ermitteln und diese Informationen in einem späteren Schritt an die ausgewählte Koordinationseinrichtung übermitteln, die diese Informationen bei der Ermittlung der Trajektorie des jeweiligen Fahrzeugs nutzen kann. Entsprechend ist es auch möglich, dass durch jede oder zumindest einige der Koordinationseinrichtungen Trajektorien für eines oder mehrere der Kraftfahrzeuge ermittelt werden. Wesentlich ist ausschließlich, dass nur eine der Koordinationseinrichtungen, nämlich die ausgewählte Koordinationseinrichtung, der "Ansprechpartner" für die Kraftfahrzeuge ist, und dass damit nur die ausgewählte Koordinationseinrichtung Fahranweisungen an eines oder mehrere Kraftfahrzeuge übermittelt.

Die Auswahl der Koordinationseinrichtung kann auf vielfältige Weise erfolgen. Wesentlich ist, dass in einem Gebiet, in dem das erfindungsgemäße Verfahren genutzt wird, die Ermittlung der Koordinationseinrichtung stets gleich erfolgt, so dass für jedes der beteiligten Kraftfahrzeuge erkennbar ist, welches die ausgewählte Koordinationseinrichtung ist.

Es ist beispielsweise möglich, dass in der Steuereinrichtung des ersten und des zweiten Kraftfahrzeugs je eine Kraftfahrzeugsprioritätsinformation gespeichert ist und das Kraftfahrzeug, dessen Steuereinrichtung die ausgewählte Koordinationseinrichtung auswählt, in Abhängigkeit dieser Kraftfahrzeugsprioritätsinformation bestimmt wird.

Da es im erfindungsgemäßen Verfahren im Wesentlichen darum geht, eine neutrale Koordinationseinrichtung zu bestimmen, kann diese Prioritätsinformation eine Information sein, deren Verteilung auf die Kraftfahrzeuge im wesentlichen zufällig ist. So kann beispielsweise eine Seriennummer eines bestimmten Bauteils, eine MAC-Adresse eines Kommunikationinterfaces oder ein weiteres im wesentlichen zufällig verteiltes aber eindeutiges Kennzeichen eines Kraftfahrzeugs genutzt werden. Ist ein solches Kennzeichen nicht vorhanden, kann alternativ auch zufällig bestimmt werden, welche Steuereinrichtung die Koordinationseinrichtung auswählt. Des weiteren ist denkbar, dass das wählende Kraftfahrzeug durch den Fahrzeugtyp oder beispielsweise eine Zuordnung des Fahrzeugs zu einem Rettungsdienst oder Ähnlichem ausgewählt wird.

Wird wie oben beschrieben zunächst ein Kraftfahrzeug ausgewählt, dessen Steuereinrichtung anschließend eine Koordinationseinrichtung wählt, so sind hierfür zusätzliche Kommunikationsschritte erforderlich. Es kann daher vorteilhaft sein, die Koordinationseinrichtung aufgrund eines Merkmals der Koordinationseinrichtung selbst auszuwählen. Insbesondere kann in jeder der Koordinationseinrichtungen eine Koordinationseinrichtungsprioritätsinformation gespeichert sein und die Bestimmung der ausgewählten Koordinationseinrichtung kann in Abhängigkeit dieser Koordinationseinrichtungsprioritätsinformation erfolgen. Die Koordinationseinrichtungsprioritätsinformation kann insbesondere von der Anzahl, Art und Lage der Sensoren der Koordinationseinrichtung abhängig sein. Die Koordinationseinrichtungsprioritätsinformation kann aber auch abhängig von der zur Verfügung stehenden Rechenkapazität der Recheneinrichtung der Koordinationseinrichtung oder von einer zur Verfügung stehenden Kommunikationsbandbreite abhängen. Dabei ist es insbesondere möglich, dass die Koordinationseinrichtungsprioritätsinformation dynamisch angepasst wird, um die Koordinationslast dynamisch zwischen mehreren Koordinationseinrichtungen aufzuteilen.

Im erfindungsgemäßen Verfahren ist es vorteilhaft, wenn das erste und das zweite Kraftfahrzeug durch die gleiche Koordinationseinrichtung über einen längeren Zeitraum beobachtet werden können, um den Fahrzeugen in dem Fall, in dem es zum Konflikt zwischen ihren Trajektorien kommt, dynamisch neue Fahranweisungen geben zu können, bis der Konflikt der Trajektorien endgültig behoben ist. Dieser Faktor kann auch bei der Wahl der ausgewählten Koordinationseinrichtung berücksichtigt werden. Es ist insbesondere möglich, dass die Koordinationseinrichtungen, deren Sensoren das erste und das zweite Kraftfahrzeug erfassen, Orts- und Bewegungsinformationen des ersten und des zweiten Kraftfahrzeugs ermitteln und eine voraussichtliche Verweildauer beider Kraftfahrzeuge in einem Erfassungsbereich des jeweiligen Sensors bestimmen, wobei die Auswahl der ausgewählten Koordinationseinrichtung in Abhängigkeit von der voraussichtlichen Verweildauer erfolgt. Insbesondere kann bei der Auswahl die voraussichtliche Verweildauer auch mit den oben genannten Prioritätsinformationen, insbesondere den Koordinationseinrichtungsprioritätsinformationen kombiniert werden. So kann beispielsweise die Koordinationseinrichtung mit der höchsten Koordinationseinrichtungsprioritätsinformation ausgewählt werden, für die eine Verweildauer von wenigstens beispielsweise 3 Sekunden ermittelt wurde. Umgekehrt ist es jedoch auch möglich, die Koordinationseinrichtung zunächst nach einer Koordinationseinrichtungsprioritätsinformation auszuwählen, diese Auswahl aber durch die Auswahl einer Koordinationseinrichtung mit einer niedrigeren Koordinationseinrichtungsprioritätsinformation zu überschreiben, falls für diese eine wesentlich längere Verweildauer ermittelt wurde.

Insbesondere wenn für mehrere Koordinationseinrichtungen alle berücksichtigten Merkmale, wie beispielsweise die Verweildauer und die Koordinationseinrichtungsprioritätsinformation, gleich sind, kann die Auswahl der ausgewählten Koordinationseinrichtungen auch durch Zufall erfolgen.

Es ist zudem möglich, dass wenigstens eine Koordinationseinrichtung, die nicht die ausgewählte Koordinationseinrichtung ist und deren Sensor das erste und/oder das zweite Kraftfahrzeug erfasst, Sensordaten und/oder ermittelte Ortsinformationen und/oder ermittelte Bewegungsinformationen und/oder wenigstens eine berechnete Trajektorie an die ausgewählte Koordinationseinrichtung übermittelt. Es wird in diesem Fall also ein Netzwerk aus zwei oder mehreren Koordinationseinrichtungen gebildet und es werden insbesondere alle in diesem Netzwerk gesammelten Informationen über das erste und das zweite Kraftfahrzeug vereint und gemeinsam genutzt, um möglichst genaue Trajektorien für das erste und das zweite Kraftfahrzeug zu bestimmen und damit eine möglichst gute Voraussage über mögliche Konflikte der Trajektorien des ersten und des zweiten Kraftfahrzeugs zu erreichen.

Beispielsweise ist es möglich, dass eine Vielzahl von Kraftfahrzeugen in der Umgebung des ersten und des zweiten Kraftfahrzeugs Koordinationseinrichtungen umfassen und zugleich ein oder mehrere Infrastruktureinrichtungen zur Koordination von Kraftfahrzeugen vorhanden sind. In diesem Fall ist es möglich, dass grundsätzlich die vorhandenen Infrastruktureinrichtungen bevorzugt als Koordinationseinrichtungen ausgewählt werden, da Infrastruktureinrichtungen üblicherweise über eine größere Anzahl von Sensoren verfügen und die Sensoren von Infrastruktureinrichtungen häufig an Orten angeordnet sind, die einen besonders guten Überblick über das Geschehen erlauben. Gleichzeitig können jedoch Teile des Verkehrsgeschehens durch Kraftfahrzeuge oder andere Störobjekte verdeckt sein. In diesem Fall können die in Drittfahrzeugen vorhandenen Koordinationseinrichtungen genutzt werden, um weitere Informationen über die verdeckten Bereiche zu ermitteln und die ermittelten Informationen an die ausgewählte Koordinationseinrichtung zu übermitteln. Selbstverständlich ist auch ein Informationsaustausch zwischen mehreren Koordinationseinrichtungen, die in Kraftfahrzeugen angeordnet sind, und/oder mehreren ortsgebundenen Infrastruktureinrichtungen möglich. Die übermittelten Informationen können auch bei der Ermittlung der Fahranweisung genutzt werden.

Es ist zudem möglich, dass eine oder mehrere der Koordinationseinrichtungen, die nicht notwendigerweise die ausgewählte Koordinationseinrichtung sind, weitere Daten wie Informationen aus einer Car2x-Kommunikation, Verkehrleitsystemen oder Ähnlichem ermitteln. Auch solche Informationen können der ausgewählten Koordinationseinrichtung zur Verfügung gestellt werden.

Es ist insbesondere möglich, dass der Sensor der oder einer der Koordinationseinrichtungen ein bildaufnehmender Sensor, insbesondere eine Kamera ist, wobei zur Ermittlung der Orts- oder Bewegungsinformationen des ersten und zweiten Kraftfahrzeugs ein Bilderkennungsalgorithmus verwendet wird. So kann beispielsweise eine Erkennung von Kraftfahrzeugen aufgrund von skaleninvarianten Merkmalen, eine Eckenerkennung oder eine Kantenerkennung, erfolgen. Insbesondere können weitere Identifikationsmerkmale an Kraftfahrzeugen, wie Nummerschilder, Strichcodes oder Ähnliches, erkannt werden.

Es ist vorteilhaft, wenn die Kommunikationseinrichtung zum Empfang von Nachrichten des ersten und zweiten Kraftfahrzeugs ausgebildet ist. In diesem Fall können insbesondere Informationen gewonnen werden, die die Sensorinformationen ergänzen. So kann, insbesondere durch Car2x-Kommunikation, jedes der Kraftfahrzeuge beispielsweise seine eigene Position, Parameter des Kraftfahrzeugs wie Geschwindigkeit, Lenkwinkel oder Ähnliches und/oder geplante Manöver übermitteln. Insbesondere eine Übermittlung von geplanten Manövern, insbesondere beim zumindest teilautomatischen Fahren der Kraftfahrzeuge, kann die Trajektorienvoraussage für mittlere und längere Zeiträume deutlich verbessern. Typische Manöverinformationen, die durch ein Kraftfahrzeug übermittelt werden, sind beispielsweise ein geplanter Spurwechsel, ein geplanter Abbiegevorgang oder Ähnliches. Es ist auch möglich, dass eine Steuereinrichtung eines Kraftfahrzeugs beim manuellen Betrieb des Kraftfahrzeugs, durch Auswertung einer Vielzahl von Fahrzeugparametern, also beispielsweise einer geplanten Route eines Navigationssystems, dem Verhalten eines Fahrers, der Geschwindigkeit oder ähnlichem Fahrmanövern voraussagt und diese an die Koordinationseinrichtung übermittelt.

Das erste und/oder das zweite Kraftfahrzeug kann eine Ermittlungseinrichtung zum Ermitteln von Ortsdaten umfassen und die ermittelten Ortsdaten können an die Koordinationseinrichtung übermittelt werden und von der Recheneinrichtung zum Erkennen des Kraftfahrzeugs in Sensorinformationen und/oder zur Bestimmung der Ortsinformation für das Kraftfahrzeug genutzt werden. Werden mehrmals Ortsinformationen übertragen, können daraus auch Bewegungsinformationen gewonnen werden.

Durch die übermittelten Ortsdaten wird auch die Zuordnung von Kraftfahrzeugen in Sensorbildern zu den verwendeten Kommunikationskanälen erleichtert. Dies gilt insbesondere, wenn die Koordinationseinrichtung eine ortsgebundene Infrastruktureinrichtung ist. Da bei ortsfesten Infrastruktureinrichtungen die Lage und Blickrichtung der Sensoren bekannt ist, kann die vom Kraftfahrzeug übermittelte Ortsinformation leicht mit einem Ort in den Sensordaten in Einklang gebracht werden und damit können Objekte leicht identifiziert werden. Ähnliches ist für die Koordinationseinrichtung in einem Kraftfahrzeug möglich, wenn für das Kraftfahrzeug selbst die Ortsinformation und vorteilhafterweise die Ausrichtung des Kraftfahrzeugs bekannt sind.

Zudem ist es wie erwähnt vorteilhaft, dass das erste und/oder das zweite Kraftfahrzeug geplante Fahrmanöver an die Koordinationseinrichtung übertragen.

Es kann vorkommen, dass die ermittelten Daten über ein Kraftfahrzeug nicht ausreichend sind, um für mittlere und längere Voraussagezeiträume eine eindeutige Trajektorie vorauszusagen. In diesem Fall ist es möglich, dass für das erste und/oder das zweite Kraftfahrzeug jeweils wenigstens zwei voraussichtliche Trajektorien ermittelt werden, wobei für jede der ermittelten Trajektorien ein Wahrscheinlichkeitswert bestimmt wird, der beschreibt, mit welcher Wahrscheinlichkeit die jeweilige voraussichtliche Trajektorie befahren werden wird. Selbstverständlich ist es ergänzend oder alternativ auch möglich, beispielsweise Fahrschläuche zu berechnen, die mit einem fortschreitenden Zeithorizont breiter werden. Zudem ist es auch möglich, diese Zeitschläuche mit einer Wahrscheinlichkeitsverteilung zu gewichten.

Durch die Ermittlung der Wahrscheinlichkeit zu den Trajektorien wird es bei einem ermittelten Konflikt möglich vorauszusagen, mit welcher Wahrscheinlichkeit dieser Konflikt auftritt. Insbesondere ist es möglich, dass bei der Ermittlung von Konflikten nur Trajektorien mit einer vorgegeben Mindestwahrscheinlichkeit berücksichtigt werden. Alternativ können auch nur Konflikte berücksichtigt werden, deren Wahrscheinlichkeit, die das Produkt der Trajektorienwahrscheinlichkeiten ist, eine vorgegebene Mindeswahrscheinlichkeit übersteigt.

Alternativ oder ergänzend kann die Wahrscheinlichkeit der Trajektorien, die zu einem Konflikt führen, auch bei der Ermittlung der Fahranweisung genutzt werden. Dies ist insbesondere für Konflikte, die eine gewisse Mindestzeit, zum Beispiel einige Sekunden, in der Zukunft liegen, möglich. So kann beispielsweise für einen Konflikt zwischen sehr wahrscheinlichen Trajektorien, der drei Sekunden, in der Zukunft liegt, eine Fahranweisung übermittelt werden, die dem Benutzer beispielsweise ein starkes Bremsen signalisiert oder die gar zu einem direkten Eingriff in die Längsführung des Kraftfahrzeugs führt. Ist ein solcher Konflikt jedoch sehr unwahrscheinlich, so kann eine Reaktion zunächst verzögert werden bzw. es kann zunächst ausreichend sein, ausschließlich einen Warnhinweis an einen Benutzer eines Kraftfahrzeugs zu geben.

Daneben betrifft die Erfindung eine Koordinationseinrichtung, die einen Sensor, eine Recheneinrichtung und eine Kommunikationseinrichtung umfasst und die zur Teilnahme an wenigstens einer Ausführungsform des zuvor beschriebenen Verfahrens ausgebildet ist.

Daneben betrifft die Erfindung auch ein Kraftfahrzeug, welches die zuvor beschriebene Koordinationseinrichtung umfasst.

Weitere Vorteile und Einzelheiten der Erfindung ergeben sich aus den folgenden Ausführungsbeispielen sowie den zugehörigen Zeichnungen. Dabei zeigen:
- Fig. 1: ein Ablaufdiagramm eines Ausführungsbeispiels eines erfindungsgemäßen Verfahrens,
- Fig. 2: eine Verkehrssituation, in der das erfindungsgemäße Verfahren genutzt werden kann,
- Fig. 3: eine weitere Verkehrssituation, in der das erfindungsgemäße Verfahren genutzt werden kann,
- Fig. 4: eine schematische Darstellung eines Ausführungsbeispiels einer erfindungsgemäßen Koordinationseinrichtung, und
- Fig. 5: eine schematische Darstellung eines Ausführungsbeispiels eines erfindungsgemäßen Kraftfahrzeugs.

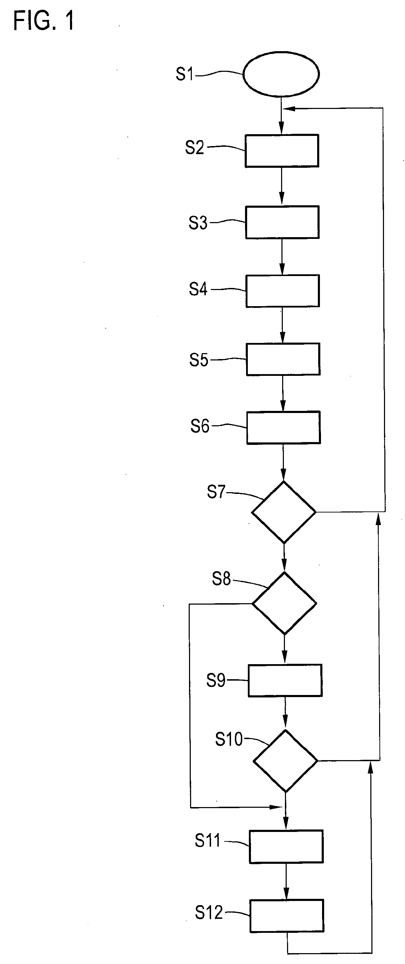

Fig. 1 zeigt ein Ausführungsbeispiel eines Ablaufdiagramms für ein Verfahren zur Koordination des Betriebs von Kraftfahrzeugen. Nach dem Beginn des Verfahrens in Schritt S1, in dem beispielsweise eine Koordinationseinrichtung aktiviert werden kann, indem beispielsweise durch einen Bewegungsmelder erkannt wird, dass sich Kraftfahrzeuge im relevanten Bereich befinden, werden in Schritt S2 durch wenigstens einen Sensor der Koordinationseinrichtung Sensordaten aufgenommen. Bei dem wenigstens einen Sensor kann es sich insbesondere um eine Kamera handeln, durch die einmalig oder kontinuierlich während des gesamten Verfahrens Bilder aufgenommen werden. Die in Schritt S2 aufgenommenen Bilddaten und/oder die aufgenommenen weiteren Daten werden in Schritt S3 analysiert, beispielsweise durch Anwendung eines Verfahrens zum Erkennen skaleninvarianter Merkmale. Damit werden Kraftfahrzeuge, insbesondere das erste und das zweite Kraftfahrzeug, in den Sensordaten erkannt. Vorzugsweise werden das erste und das zweite Kraftfahrzeug in wenigstens zwei zeitlich beabstandeten Datensätzen der Sensordaten erkannt. Damit kann auch aus reinen Bildinformationen nicht ausschließlich eine Ortsinformation für den Ort, an dem sich die Kraftfahrzeuge aufhalten, sondern auch eine Bewegungsinformation gewonnen werden. Vorteilhaft werden in Schritt S3 auch Identifikationsmerkmale der Kraftfahrzeuge erkannt, mit denen es insbesondere möglich sein kann, direkt Informationen über einen Kommunikationskanal mit dem Kraftfahrzeug zu erkennen. So können beispielsweise Nummernschilder, Fahrzeugtypen, -farben oder Ähnliches erkannt werden. Auch die Position des Kraftfahrzeugs oder beispielsweise die Bewegungsrichtung des Kraftfahrzeugs kann im weiteren Fahren genutzt werden, um das Kraftfahrzeug zu identifizieren.

Nachdem die Kraftfahrzeuge in vorzugsweise mehreren aufeinanderfolgenden Datensätzen der Sensordaten erkannt wurden, können in Schritt S4 Orts- und Bewegungsinformationen bestimmt werden. Zur Ermittlung der Orts- und Bewegungsinformationen können weitere bekannte Informationen genutzt werden. So ist beispielsweise davon auszugehen, dass sich alle erkannten Kraftfahrzeuge auf der Straßenoberfläche befinden. Damit ist in den meisten Fällen der Freiheitsgrad der Ortsinformation auf zwei Dimensionen eingeschränkt, womit bereits ein einzelnes Kamerabild ausreicht, um die Ortsinformation für ein Kraftfahrzeug zu bestimmen.

Eine solche Ortsbestimmung erfolgt jeweils relativ zum Sichtfeld des Sensors. Bei ortsfesten Sensoren kann damit direkt auf die Position des Kraftfahrzeugs im dreidimensionalen Raum zurückgeschlossen werden. Ist die Koordinationseinrichtung Teil eines Kraftfahrzeugs, so ist auch der Sensor typischerweise am Kraftfahrzeug angeordnet. In diesem Fall ist es vorteilhaft, zunächst die Position des Kraftfahrzeugs zu bestimmen, das die Koordinationseinrichtung umfasst. Aus der Position des Kraftfahrzeugs und dem bekannten Anordnungsort des Sensors am Kraftfahrzeug kann dann auf den Ort eines in den Sensordaten erkannten Kraftfahrzeugs zurückgeschlossen werden.

Eine Erkennung von Bewegungsinformationen ist besonders vorteilhaft aus Ortsinformationen aus zeitlich aufeinanderfolgenden Sensordatensätzen und mit bekanntem Zeitabstand möglich.

Die aus den Sensordaten gewonnenen Daten werden in Schritt S5 durch weitere Daten ergänzt. Es ist vorteilhaft, wenn das erste und/oder das zweite Kraftfahrzeug Kraftfahrzeugsinformationen an die Koordinationseinrichtung übertragen. Beispielsweise können die Kraftfahrzeuge GPS-Koordinaten übertragen, es ist aber auch möglich, Fahrzeugparameter wie Lenkwinkel, Stellung von Gas- und Bremspedal oder Ähnliches zu übertragen. Für eine besonders zuverlässige Ermittlung der Trajektorie im weiteren Verfahren ist es auch vorteilhaft, wenn die Kraftfahrzeuge geplante Manöver übertragen. Dies ist insbesondere dann möglich, wenn sich das Kraftfahrzeug in einem Fahrmodus zum teil- oder vollautomatischen Fahren befindet. Es ist jedoch auch möglich, dass das Kraftfahrzeug situationsabhängig aus Fahrzeugparametern, beispielsweise einem Ziel in einem Navigationssystem, sowie dem Verhalten des Fahrers ein wahrscheinliches Fahrmanöver abzuleiten und es an die Koordinationseinrichtung zu übermitteln. Im Schritt S5 können zudem weitere Daten aus externen Quellen gesammelt werden, beispielsweise können Informationen über eine Ampelschaltung oder Ähnliches aus einem Verkehrsleitsystem gewonnen werden.

Die in den Schritten S4 und S5 gewonnen Informationen werden in Schritt S6 genutzt, um zumindest für das erste und das zweite Kraftfahrzeug eine Trajektorie zu bestimmen. Bei der Bestimmung der Trajektorie können zudem weitere Informationen genutzt werden. So können aus den Sensordaten die Positionen und Geschwindigkeiten weiterer Fahrzeuge erkannt werden und damit die Bewegung der weiteren Kraftfahrzeuge als Randbedingungen für die Trajektorie des ersten und des zweiten Kraftfahrzeugs genutzt werden. Zudem ist es in Schritt S6 auch möglich, zur Bestimmung der Trajektorie statistische Informationen zu nutzen. Beispielsweise kann es zu einem gewissen Ort und zu einer gewissen Uhrzeit sehr wahrscheinlich sein, dass ein Kraftfahrzeug, das sich auf einer gewissen Spur mit einer gewissen Geschwindigkeit bewegt, abbiegt oder eben nicht abbiegt.

Typischerweise kann in Schritt S6 zumindest für mittlere und längere Zeiträume keine eindeutige Trajektorie für das erste oder das zweite Kraftfahrzeug vorausbestimmt werden. In diesem Fall können für das erste oder das zweite Kraftfahrzeug mehrere Trajektorien ermittelt werden. Insbesondere ist es möglich, bei der Ermittlung von mehreren Trajektorien zu jeder dieser Trajektorien einen Wahrscheinlichkeitswert zu speichern, der angibt, wie wahrscheinlich diese Trajektorie voraussichtlich ausgeführt wird.

In Schritt S7 wird für die ermittelten Trajektorien für das erste und das zweite Kraftfahrzeug bestimmt, ob diese Konflikte aufweisen, das heißt, ob es zu einem zeitlichen oder räumlichen Überlappen zwischen den Trajektorien kommt. Zur Bestimmung des Überlappens der verschiedenen Trajektorien sollten diese nicht als eindimensionale Objekte, also als Linien betrachtet werden, sondern jede dieser Trajektorien sollte als Fahrschlauch betrachtet werden, der zumindest so breit ist wie das Kraftfahrzeug und ein zwischen den Kraftfahrzeugen einzuhaltender Sicherheitsabstand.

Werden für das erste und/oder zweite Kraftfahrzeug mehrere Trajektorien ermittelt, so kann für jedes Paar der Trajektorien des ersten und des zweiten Kraftfahrzeugs ermittelt werden, ob ein Konflikt zwischen diesen Trajektorien auftritt. Es kann jedoch auch nur ein Konflikt für Trajektorien ermittelt werden, die eine gewisse Mindestwahrscheinlichkeit aufweisen oder für solche Trajektorienpaare, für die das Produkt der Trajektorienwahrscheinlichkeit eine gewisse Mindestwahrscheinlichkeit aufweist. Wird für keine der ermittelten Trajektorien in Schritt S7 ermittelt, dass ein Konflikt vorliegt, so kann das Verfahren ab Schritt S2 wiederholt werden, das heißt, es werden neue Sensordaten aufgenommen und es wird überprüft, ob sich aus den Sensordaten auf einen Konflikt zwischen den Trajektorien der Kraftfahrzeuge schließen lässt.

Falls in Schritt S7 ein Konflikt ermittelt wurde, so wird in Schritt S8 überprüft, ob sich das erste und das zweite Kraftfahrzeug im Sensorbereich mehrerer Koordinationseinrichtungen befinden. Befinden sich das erste und das zweite Kraftfahrzeug ausschließlich im Sensorbereich einer einzigen Koordinationseinrichtung, so kann das Verfahren direkt im Schritt S11 fortgesetzt werden, da bei Vorhandensein einer einzigen Koordinationseinrichtung keine widersprüchlichen Fahranweisungen erzeugt werden können.

Wird jedoch festgestellt, dass sich die Kraftfahrzeuge im Sensorbereich mehrerer Koordinationseinrichtungen befinden, so muss im weiteren Verfahren sichergestellt werden, dass nur eine einzelne Koordinationseinrichtung Fahranweisungen an die Kraftfahrzeuge sendet, um das Senden von zwei widersprüchlichen Fahranweisungen an ein Kraftfahrzeug oder das Senden von einer Fahranweisung an ein erstes der Kraftfahrzeuge durch eine erste Koordinationseinrichtung und von einer Fahranweisung an ein zweites der Kraftfahrzeuge durch eine zweite Koordinationseinrichtung, wodurch wiederum eine getrennte Konfliktbehandlung erfolgen würde, zu vermeiden.

Daher wird in Schritt S9 eine einzige der Koordinationseinrichtungen ausgewählt, die im weiteren Verfahren genutzt werden soll. Da die vorangehenden Verfahrensschritte von allen Koordinationseinrichtungen ausgeführt wurden, in deren Bildbereich sich das erste und das zweite Kraftfahrzeug befinden, sind auch von jeder dieser Koordinationseinrichtungen Trajektorieninformationen ermittelt worden. Daher kann in Schritt S9 beispielsweise anhand dieser Trajektorieninformationen und der eventuell vorhandenen Wahrscheinlichkeit dieser Trajektorien ermittelt werden, wie lange sich das erste und das zweite Kraftfahrzeug voraussichtlich im Sensorbereich jeder Koordinationseinrichtung befinden werden. Damit kann die Koordinationseinrichtung ausgewählt werden, deren Sensoren die Fahrzeuge voraussichtlich am längsten erfassen. Zudem kann für jede Koordinationseinrichtung bekannt sein, welche Art von Sensoren und wie viele Sensoren sie aufweist und wie diese Sensoren platziert sind. Aus diesen Informationen kann eine Prioritätsinformation ermittelt werden, die angibt, wie gut eine jeweilige Koordinationseinrichtung das Verkehrsgeschehen jeweils beurteilen kann. Zudem kann die Priorität der Koordinationseinrichtung durch die jeweilige Belastung der Koordinationseinrichtung bestimmt werden. So kann bei ansonsten ähnlicher Priorität und ähnlicher Verweildauer eine Koordinationseinrichtung gewählt werden, die weniger belastet ist.

Nach Bestimmung der ausgewählten Koordinationseinrichtung wird von jeder Koordinationseinrichtung in Schritt S10 überprüft, ob sie selbst die ausgewählte Koordinationseinrichtung ist. Wurde eine Koordinationseinrichtung nicht als ausgewählte Koordinationseinrichtung ausgewählt, so übermittelt die nicht ausgewählte Koordinationseinrichtung unter Umständen Sensor-, Orts-, Bewegungs- oder Trajektoriendaten an die ausgewählte Koordinationseinrichtung und springt anschließend an den Anfang des Verfahrens zurück. Ist eine Koordinationseinrichtung jedoch die ausgewählte Koordinationseinrichtung, so ermittelt sie in Schritt S11 eine Fahrempfehlung zumindest für das erste oder das zweite Kraftfahrzeug. Eine solche Fahrempfehlung kann beispielsweise die Anweisung enthalten zu bremsen, zu beschleunigen oder in eine bestimmte Richtung zu lenken. Die Art der Fahrinformation kann davon abhängen, ob das Kraftfahrzeug, an das die Fahrinformation übertragen wird, durch einen Fahrer gesteuert wird oder teil- oder vollautomatisch gesteuert wird. Bei vollautomatischer Steuerung können beispielsweise exakte Informationen übertragen werden, wie die Anweisung, das Fahrzeug zwei Sekunden mit einer Beschleunigung von -2m/s² abzubremsen. Bei einer Steuerung des Kraftfahrzeugs durch einen Fahrer kann es vorteilhaft sein, nur eine grobe Fahranweisung, wie ein schlichtes "Bremsen" zu übertragen. Alternativ können durch die Koordinationseinrichtung auch stets genaue Fahranweisungen übertragen werden, die anschließend durch eine Steuereinrichtung des Kraftfahrzeugs je nach dem Betriebsmodus, in dem sich das Kraftfahrzeug befindet, entsprechend angepasst und dargestellt oder ausgeführt werden.

Nach der Ermittlung einer solchen Fahranweisung für das erste und/oder das zweite Kraftfahrzeug kann diese im Schritt S12 an das jeweilige Kraftfahrzeug übermittelt werden. Eine solche Übermittlung ist besonders dann einfach möglich, wenn bereits zuvor eine Kommunikation zwischen dem Kraftfahrzeug und der Koordinationseinrichtung erfolgte. In diesem Fall kann beispielsweise das Kraftfahrzeug der Koordinationseinrichtung schon eine Identifikationsnummer oder eine andere Kommunikationsschnittstelle übermitteln, über die die Koordinationseinrichtung eindeutig ein einzelnes Kraftfahrzeug ansprechen kann. Ist eine solche Kommunikation im bisherigen Verfahren nicht erfolgt, kann dennoch gezielt ein einzelnes Kraftfahrzeug angesprochen werden, beispielsweise indem aus den Sensordaten eine Position und eine Bewegungsrichtung des Kraftfahrzeugs ermittelt wird und anschließend die Fahrinformation mit dieser Position und Bewegungsrichtung als Zusatzinformation übertragen wird. Die übermittelte Information wird zunächst durch jedes Kraftfahrzeug empfangen und anschließen kann in jedem Kraftfahrzeug anhand eines Vergleichs der übermittelten Positions- und Bewegungsinformation oder Ähnlichem ermittelt werden, ob die Fahranweisung für das jeweilige Fahrzeug bestimmt ist. Die Nennung von Positions- und Bewegungsinformation ist hier rein beispielhaft. Beispielsweise können alternativ oder ergänzend auch Informationen über Fahrzeugtyp, Farbe, erkannte Autonummern oder Ähnliches übermittelt werden.

Nach Übertragung der Fahranweisung kann das Verfahren wieder mit Schritt S2, also der erneuten Aufnahme von Sensordaten fortgesetzt werden. Es ist besonders vorteilhaft, wenn jeweils Koordinationseinrichtungen gewählt werden, die die Bewegung des ersten und des zweiten Kraftfahrzeugs über mehrere Sekunden beobachten können. In diesem Fall ist es auch möglich die Reaktion des ersten bzw. des zweiten Kraftfahrzeugs auf die übertragenen Fahranweisungen zu überprüfen und das Verhalten des ersten bzw. des zweiten Kraftfahrzeugs durch Übermittlung neuer Fahranweisungen stetig anzupassen. Eine solche Anpassung kann kontinuierlich oder stufenweise so lange erfolgen, bis die Konfliktsituation behoben ist.

Es ist anzumerken, dass das in Fig. 1 gezeigte Verfahren ebenso für mehr als zwei Fahrzeuge, insbesondere alle im Bildbereich eines Sensors befindlichen Fahrzeuge durchgeführt werden kann. Häufig ist es jedoch vorteilhaft, Fahranweisungen und damit Trajektorienanpassungen nicht für alle Fahrzeuge im Sensorbereich gleichzeitig zu ermitteln, sondern jeweils Untergruppen von Kraftfahrzeugen zu betrachten, die direkt miteinander interagieren. Damit kann die Komplexität des Verfahrens reduziert werden.

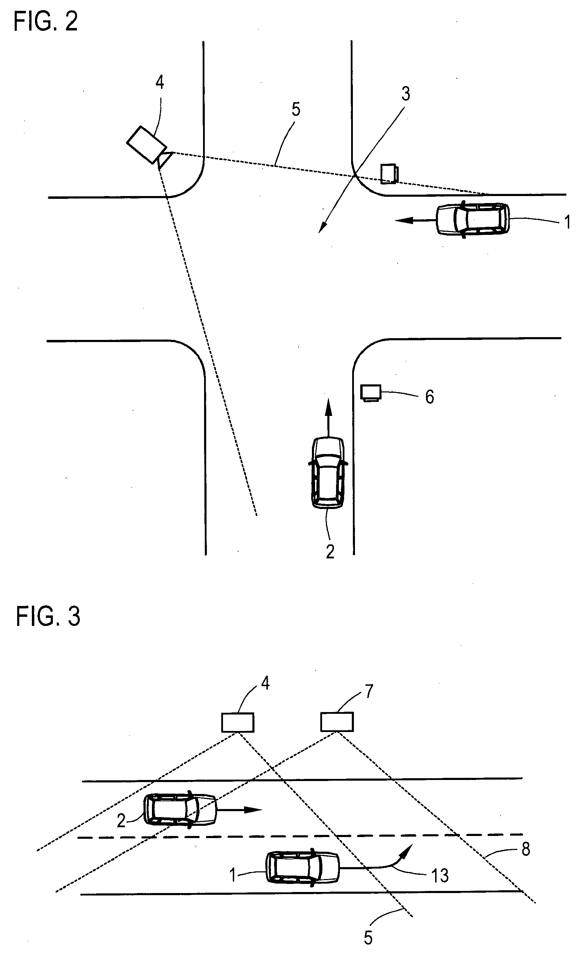

Fig. 2 zeigt eine Verkehrssituation, in der ein Verfahren zur Koordination des Betriebs von Kraftfahrzeugen genutzt werden kann. Ein erstes Kraftfahrzeug 1 und ein zweites Kraftfahrzeug 2 bewegen sich beide mit einer gewissen Geschwindigkeit auf eine Kreuzung 3 zu. An der Kreuzung 3 ist eine Koordinationseinrichtung 4 angeordnet, die hier als ortsgebundene Infrastruktureinrichtung ausgebindet ist. Die Koordinationseinrichtung 4 weist wenigstens einen Sensor auf, der einen Sensorbereich 5 abbildet, in dem sich das erste Kraftfahrzeug 1 und das zweite Kraftfahrzeug 2 befinden. Typische Koordinationseinrichtungen könnten mehrere, auch beabstandete Sensoren umfassen. Um die wesentlichen Punkte klarer darzustellen, wird hier vereinfachend davon ausgegangen, dass die Koordinationseinrichtung nur einen Sensor aufweist. Der Sensor erfasst kontinuierlich Bilder der Kreuzung 3. Aus den Sensordaten, also in diesem Fall aus den Bilddaten, erkennt die Koordinationseinrichtung 4, dass sich das Kraftfahrzeug 1 vor der Kreuzung 3 befindet und sich auf die Kreuzung 3 zubewegt und sich das Kraftfahrzeug 2 vor der Kreuzung 3 befindet und sich auf diese zubewegt. Als einfachste Annahme zur Bestimmung der Trajektorie kann die Koordinationseinrichtung 4 davon ausgehen, dass sich die Kraftfahrzeuge 1 und 2 mit den gleichen Geschwindigkeiten weiterbewegen. In diesem Fall würden die resultierenden Trajektorien zu einer Kollision der Kraftfahrzeuge 1 und 2 auf der Kreuzung 3 führen. Liegen der Koordinationseinrichtung 4 keine zusätzlichen Informationen vor, so wird also ein Konflikt zwischen den Trajektorien der Kraftfahrzeuge 1 und 2 erkannt und die Koordinationseinrichtung 4 ermittelt für mindestens eines der Kraftfahrzeuge 1, 2 eine Fahranweisung. Beispielsweise kann die Koordinationseinrichtung 4 für Kraftfahrzeug 1 die Fahranweisung ermitteln, dass Kraftfahrzeug 1 bremsen soll. Alternativ kann es aber auch vorteilhaft sein, eine Information an Kraftfahrzeug 2 zu übermitteln, dass dieses beschleunigen soll. In beiden Fällen kann eine Kollision mit dieser Fahrempfehlung vermieden werden.

Würde Kraftfahrzeug 2 in der gezeigten Situation beispielsweise rechts abbiegen und würde dies durch das Setzen eines Blinkers signalisieren, so könnte die Koordinationseinrichtung 4 dies erkennen und eine Trajektorie für Kraftfahrzeug 2 ermitteln, die beschreibt, dass Kraftfahrzeug 2 rechts abbiegt. Damit würde zunächst kein Konflikt ermittelt. Beim weiteren Annähern an die Kreuzung kann die Wahrscheinlichkeit für eine abbiegende Trajektorie beispielsweise in Abhängigkeit der Geschwindigkeit des Kraftfahrzeugs 2 angepasst werden.

Fig. 2 zeigt zudem eine Ampel 6. Es ist möglich, dass der Koordinationseinrichtung 4 Informationen über das Schaltverhalten der Ampel 6 zur Verfügung stehen. Es soll angenommen werden, dass die Ampel 6 an der Einmündung, auf die sich das Kraftfahrzeug 2 zubewegt auf rot steht. Diese Information über das Schaltverhalten der Ampel 6 kann durch die Koordinationseinrichtung 4 auf unterschiedliche Weisen genutzt werden, von denen zwei beispielhaft erläutert werden. Im einfachsten Fall kann die Ermittlung der Trajektorien und damit des Konflikts wie in der vorangegangenen Beschreibung erfolgen. Da der Koordinationseinrichtung 4 nun aber bekannt ist, dass die Ampel 6 auf rot steht, wird die Fahranweisung zu bremsen an das Kraftfahrzeug 2 übertragen. In diesem Fall werden die zusätzlich zur Verfügung stehenden Informationen also dazu genutzt, Fahranweisungen derart an die Kraftfahrzeuge zu geben, dass die Straßenverkehrsordnung eingehalten wird.

Die Informationen über die Ampelschaltung können von der Koordinationseinrichtung 4 jedoch bereits bei der Ermittlung der Trajektorien genutzt werden. Sind die Kraftfahrzeuge 1 und 2 noch relativ weit von der Kreuzung 3 entfernt, so kann beispielsweise die Koordinationseinrichtung 4 bei der Ermittlung der Trajektorie des Kraftfahrzeugs 2 zunächst davon ausgehen, dass dieses die rote Ampel berücksichtigt und abbremst. Somit kann für das Kraftfahrzeug 2 zunächst eine Trajektorie mit hoher Wahrscheinlichkeit berechnet werden, die ein Anhalten des Kraftfahrzeugs 2 an der Ampel 6 zeigt, und eine Trajektorie mit sehr niedriger Wahrscheinlichkeit, die ein Überfahren der roten Ampel 6 beschreibt. Dies kann zunächst dazu führen, dass die Trajektorie des Kraftfahrzeugs 2, die ein Überfahren der Ampel 6 anzeigt, einen Wahrscheinlichkeitsgrenzwert unterschreitet und zunächst nicht bei der Ermittlung von Konflikten berücksichtigt wird. Damit würde durch die Koordinationseinrichtung 4 auch kein Konflikt festgestellt und es würden keine Fahranweisungen an eines der Kraftfahrzeuge 1, 2 übermittelt. Nähert sich nun das Kraftfahrzeug 2 mit unverminderter Geschwindigkeit weiter der Ampel 6, so würde die Wahrscheinlichkeit für die Trajektorie, die ein Überfahren der Ampel beschreibt, kontinuierlich ansteigen. Bereits vor einem Überfahren der roten Ampel wäre die Wahrscheinlichkeit dieser Trajektorie damit auf einen Wert angestiegen, der einen vorgegebenen Grenzwert in der Koordinationseinrichtung 4 übersteigt und die Trajektorie würde damit bei der Überprüfung auf Konflikte berücksichtigt. Die Koordinationseinrichtung 4 würde damit an Kraftfahrzeug 2 eine Fahranweisung zum Bremsen übertragen.

Fig. 3 zeigt eine Verkehrssituation, in der sich das erste Kraftfahrzeug 1 und das zweite Kraftfahrzeug 2 auf zwei in die gleiche Richtung führenden Spuren einer Straße befinden. Am Rand dieser Straße sind zwei Koordinationseinrichtungen 4 und 7, die ortsgebundene Infrastruktureinrichtungen sind, angeordnet. Die Kraftfahrzeuge 1 und 2 befinden sich im Sensorbereich 5 der Koordinationseinrichtung 4 und im Sensorbereich 8 der Koordinationseinrichtung 7. Da sich die Kraftfahrzeuge 1 und 2 in den Sensorbereichen von zwei Koordinationseinrichtungen 4 und 7 befinden, wird es im Verlauf des Verfahrens notwendig, zu ermitteln, welche der Koordinationseinrichtungen falls notwendig eine Fahranweisung an eines der Kraftfahrzeuge oder beide Kraftfahrzeuge übertragen soll. Hierzu wird beispielsweise zunächst aus den gewonnenen Bilddaten in jeder der Koordinationseinrichtungen 4, 7 eine erste Trajektorie für die Kraftfahrzeuge 1 und 2 berechnet. Sowohl in der Koordinationseinrichtung 4, als auch in der Koordinationseinrichtung 7 wird ermittelt, dass sich die beiden Fahrzeuge mit einer gewissen Geschwindigkeit von links nach rechts bewegen. Damit kann ermittelt werden, dass sich die beiden Kraftfahrzeuge länger im Sensorbereich 8 der Koordinationseinrichtung 7 aufhalten werden als im Sensorbereich 5 der Koordinationseinrichtung 4, wodurch die Koordinationseinrichtung 7 zur ausgewählten Koordinationseinrichtung bestimmt werden kann. Die beiden Kraftfahrzeuge 1 und 2 bewegen sich hier zunächst geradlinig, wodurch durch eine geradlinige Weiterführung der Trajektorien, also eine Weiterbewegung mit konstanter Geschwindigkeit für beide Kraftfahrzeuge, kein Konflikt der Trajektorien der Kraftfahrzeuge 1 und 2 auftritt. Kraftfahrzeug 1 übermittelt hier jedoch ein geplantes Manöver 13, nämlich einen Spurwechsel, an die Koordinationseinrichtung 7. Aus den Sensorinformationen ermittelt die Koordinationseinrichtung 7 jedoch, dass sich Kraftfahrzeug 1 merklich langsamer bewegt als Kraftfahrzeug 2. Würde nun Kraftfahrzeug 1 das Manöver 13 durchführen und würden sich Kraftfahrzeug 1 und 2 mit ungefähr konstanter Geschwindigkeit weiterbewegen, so würden sich die Trajektorien der Kraftfahrzeuge 1 und 2 überlappen, das heißt, es bestünde die Gefahr eines Unfalls.

Die Koordinationseinrichtung 7 kann Kraftfahrzeug 1 daher beispielsweise die Fahranweisung übermitteln, die Geschwindigkeit vor Durchführung des Spurwechsels um einen gewissen Mindestbetrag zu erhöhen. Stellt die Koordinationseinrichtung 7 bei der wiederholten Durchführung des Verfahrens fest, dass das Kraftfahrzeug 1 den Spurwechsel einleitet, bevor eine ausreichende Beschleunigung erfolgte, so kann eine Fahranweisung an Kraftfahrzeug 1 übertragen werden, den Spurwechsel nicht durchzuführen oder eine Fahranweisung an Kraftfahrzeug 2, dass Kraftfahrzeug 2 bremsen soll. Vorzugsweise können zur Maximierung der Fahrsicherheit auch beide Fahranweisungen übertragen werden.

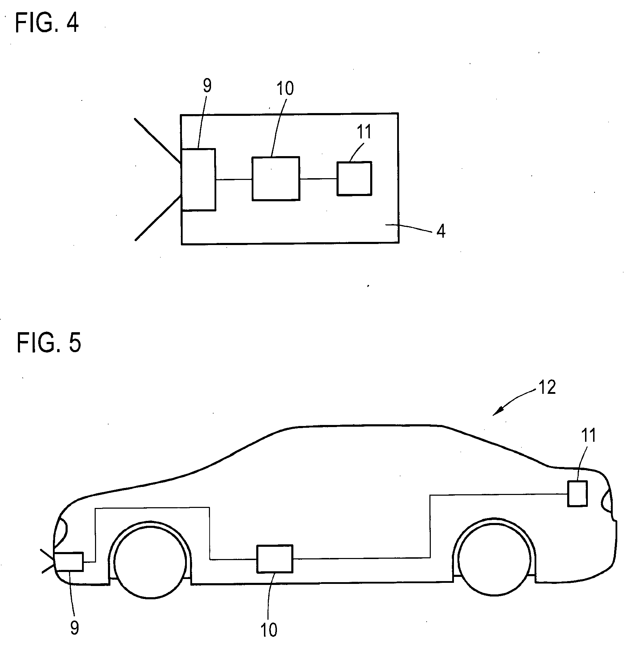

Fig. 4 zeigt ein Ausführungsbeispiel einer Koordinationseinrichtung. Die Koordinationseinrichtung 4 umfasst einen Sensor 9, eine Recheneinrichtung 10 sowie eine Kommunikationseinrichtung 11. Die Koordinationseinrichtung kann wie hier gezeigt alle Komponenten in einem Gehäuse umfassen, es ist jedoch auch möglich, dass sich ein oder mehrere Sensoren außerhalb des Gehäuses befinden, beispielsweise um eine Bildaufnahme eines Straßenabschnitts aus mehreren Perspektiven zu ermöglichen. Der Sensor 9 kann insbesondere eine Kamera sein, es ist jedoch auch die Nutzung anderer Sensoren wie Ultraschallsensoren oder Radarsensoren möglich. Die gesammelten Sensordaten werden von der Recheneinrichtung 10 ausgewertet, die wie zuvor erläutert, einzelne Kraftfahrzeuge erkennen kann, für die erkannten Kraftfahrzeuge Orts-und Bewegungsinformationen bestimmen kann, aus diesen im Zusammenhang mit weiteren, beispielsweise über die Kommunikationseinrichtung 11 empfangenen Informationen Trajektorien berechnen kann und anschließend überprüfen kann, ob sich die Trajektorien von mehreren Kraftfahrzeugen überlappen. In diesem Fall kann die Recheneinrichtung auch Fahranweisungen für die Kraftfahrzeuge berechnen und diese mit Hilfe der Kommunikationseinrichtung 11 an die Kraftfahrzeuge übertragen.

Fig. 5 zeigt ein Kraftfahrzeug 12, das eine Koordinationseinrichtung zur Koordination des Betriebs von Kraftfahrzeugen umfasst. Beispielhaft ist hier ein Sensor 9 im vorderen Bereich des Kraftfahrzeugs 12 gezeigt. Selbstverständlich können alle am Kraftfahrzeug 12 angeordneten Sensoren auch von der Koordinationseinrichtung mitgenutzt werden. Die Recheneinrichtung 10 der Koordinationseinrichtung kann als ein separates Bauteil ausgebildet sein, sie kann aber auch als ein Unterprogramm einer Steuereinrichtung des Kraftfahrzeugs 12 funktionieren. Ebenso kann als Kommunikationseinrichtung 11 eine Kommunikationseinrichtung zur Car2Car- oder Car2X-Kommunikation, die im Kraftfahrzeug 12 ohnehin vorhanden ist, genutzt werden.

## Patentansprüche

1. Verfahren zur Koordination des Betriebs wenigstens eines ersten und eines zweiten Kraftfahrzeugs (1, 2) durch wenigstens eine Koordinationseinrichtung (4, 7), die eine ortsgebundene Infrastruktureinrichtung oder Teil eines dritten Kraftfahrzeugs (12) ist und wenigstens einen Sensor (9), eine Recheneinrichtung (10) und eine Kommunikationseinrichtung (11) umfasst, umfassend die Schritte:
- Aufnahme von Sensordaten mit dem Sensor (9) der Koordinationseinrichtung (4, 7),
- Ermittlung von Orts- und Bewegungsinformationen des ersten und des zweiten Kraftfahrzeugs (1, 2) unter Verwendung der Sensordaten durch die Recheneinrichtung (10),
- Berechnung wenigstens einer voraussichtlichen Trajektorie für das erste und das zweite Kraftfahrzeug (1, 2) unter Verwendung der jeweiligen Orts- und Bewegungsinformationen durch die Recheneinrichtung (10),
- Überprüfen der Trajektorien auf Konflikte, die aufgrund einer räumlichen und zeitlichen Überlappung der Trajektorie des ersten Kraftfahrzeugs (1) mit der Trajektorie des zweiten Kraftfahrzeugs (2) auftreten, durch die Recheneinrichtung (10),
- Ermittlung einer Fahranweisung für das erste und/oder das zweite Kraftfahrzeug (1, 2) durch die Recheneinrichtung (10), falls das Vorliegen eines Konflikts ermittelt wurde,
- Übermittlung der Fahranweisung an das erste und/oder zweite Kraftfahrzeug (1, 2) durch die Kommunikationseinrichtung (11), und
- Ausführen der empfangenen Fahranweisung durch das erste und/oder das zweite Kraftfahrzeug (1, 2) und/oder Anzeige der empfangenen Fahranweisung auf einer Anzeigeeinrichtung des ersten und/oder zweiten Kraftfahrzeugs (1, 2).

2. Verfahren nach Anspruch 1,
**dadurch gekennzeichnet,**
**dass** bei Erfassung des ersten und des zweiten Kraftfahrzeugs (1, 2) durch die Sensoren (9) von wenigstens zweier der Koordinationseinrichtungen (4, 7) in einem weiteren Schritt vor Ermittlung einer Fahranweisung eine der Koordinationseinrichtungen (4, 7) durch die Recheneinrichtung (10) wenigstens einer Koordinationseinrichtung (4, 7) oder durch die Steuereinrichtungen des ersten und/oder des zweiten Kraftfahrzeugs (1, 2) ausgewählt wird und ausschließlich die Recheneinrichtung (10) der ausgewählten Koordinationseinrichtung (4, 7), die wenigstens eine Fahranweisung ermittelt.

3. Verfahren nach Anspruch 2,
**dadurch gekennzeichnet,**
**dass** in der Steuereinrichtung des ersten und des zweiten Kraftfahrzeugs (1, 2) je eine Kraftfahrzeugsprioritätsinformation gespeichert ist und das Kraftfahrzeug (1, 2), dessen Steuereinrichtung die ausgewählte Koordinationseinrichtung (4, 7) auswählt, in Abhängigkeit dieser Kraftfahrzeugsprioritätsinformation bestimmt wird.

4. Verfahren nach Anspruch 2 oder 3,
**dadurch gekennzeichnet,**
**dass** in jeder der Koordinationseinrichtungen (4, 7) eine Koordinationseinrichtungsprioritätsinformation gespeichert ist und die Bestimmung der ausgewählten Koordinationseinrichtung (4, 7) in Abhängigkeit dieser Koordinationseinrichtungsprioritätsinformation erfolgt.

5. Verfahren nach einem der Ansprüche 2 bis 4,
**dadurch gekennzeichnet,**
**dass** die Koordinationseinrichtungen (4, 7), deren Sensoren (9) das erste und das zweite Kraftfahrzeug (1, 2) erfassen, Orts- und Bewegungsinformationen des ersten und des zweiten Kraftfahrzeugs (1, 2) ermitteln und eine voraussichtliche Verweildauer beider Fahrzeuge in einem Erfassungsbereich des jeweiligen Sensors (9) bestimmen, wobei die Auswahl der ausgewählten Koordinationseinrichtung (4, 7) in Abhängigkeit von der voraussichtlichen Verweildauer erfolgt.

6. Verfahren nach einem der Ansprüche 2 bis 5,
**dadurch gekennzeichnet,**
**dass** wenigstens eine Koordinationseinrichtung (4, 7), die nicht die ausgewählte Koordinationseinrichtung (4, 7) ist und deren Sensor (9) das erste und/oder das zweite Kraftfahrzeug (1, 2) erfasst, Sensordaten und/oder ermittelte Ortsinformationen und/oder ermittelte Bewegungsinformationen und/oder wenigstens eine berechnete Trajektorie an die ausgewählte Koordinationseinrichtung (4, 7) übermittelt.

7. Verfahren nach einem der vorangehenden Ansprüche, **dadurch gekennzeichnet, dass** der Sensor (9) ein bildaufnehmender Sensor, insbesondere eine Kamera, ist, wobei zur Ermittlung der Orts- und/oder Bewegungsinformationen des ersten und zweiten Kraftfahrzeugs (1, 2) ein Bilderkennungsalgorithmus verwendet wird.

8. Verfahren nach einem der vorangehenden Ansprüche, **dadurch gekennzeichnet, dass** die Kommunikationseinrichtung (11) zum Empfang von Nachrichten des ersten und des zweiten Kraftfahrzeugs (1, 2) ausgebildet ist.

9. Verfahren nach Anspruch 8,
**dadurch gekennzeichnet,**
**dass** das erste und/oder das zweite Kraftfahrzeug (1, 2) eine Ermittlungseinrichtung zur Ermittlung von Ortsdaten umfasst, und die ermittelten Ortsdaten an die Koordinationseinrichtung (4, 7) übermittelt werden und von deren Recheneinrichtung (10) zur Erkennung des Kraftfahrzeugs (1, 2) in Sensorinformationen und/oder zur Bestimmung der Ortsinformation für das Kraftfahrzeug (1, 2) genutzt werden.

10. Verfahren nach Anspruch 8 oder 9,
**dadurch gekennzeichnet,**
**dass** durch das erste und/oder das zweite Kraftfahrzeug (1, 2) geplante Fahrmanöver an die Koordinationseinrichtung (4, 7) übertragen werden.

11. Verfahren nach einem der vorangehenden Ansprüche,
**dadurch gekennzeichnet,**
**dass** für das erste und/oder das zweite Kraftfahrzeug (1, 2) jeweils wenigstens zwei voraussichtliche Trajektorien ermittelt werden, wobei für jede der ermittelten Trajektorien ein Wahrscheinlichkeitswert bestimmt wird, der beschreibt, mit welcher Wahrscheinlichkeit die jeweilige voraussichtliche Trajektorie befahren werden wird.

12. Verfahren nach Anspruch 11,
**dadurch gekennzeichnet,**
**dass** nur Trajektorien mit einer vorgegebenen Mindestwahrscheinlichkeit bei der Ermittlung von Konflikten berücksichtigt werden.

13. Verfahren nach einem der vorangehenden Ansprüche,
**dadurch gekennzeichnet, dass** eine voraussichtliche Zeit bis zum Eintreten des Konflikts bei der Ermittlung der Fahranweisung berücksichtigt wird.

14. Koordinationseinrichtung,
**dadurch gekennzeichnet,**
**dass** sie einen Sensor (9), eine Recheneinrichtung (10) und eine Kommunikationseinrichtung (11) umfasst und zur Teilnahme an einem Verfahren nach einem der Ansprüche 1 bis 13 ausgebildet ist.

15. Kraftfahrzeug,
**dadurch gekennzeichnet,**
**dass** es eine Koordinationseinrichtung (4) nach Anspruch 14 umfasst.

## Claims

1. Method for coordinating an operation of at least one first and one second motor vehicle (1, 2) using at least one coordination device (4, 7) configured as a stationary infrastructure device or as part of a third motor vehicle (12) and comprising at least one sensor (9), a computing device (10) and a communication device (11), the method comprising:
- recording sensor data with the sensor (9) of the coordination device (4, 7),
- determining location information and movement information of the first and the second motor vehicle (1, 2) by using the sensor data of the computing device (10),
- calculating at least one expected trajectory for the first and second motor vehicle (1, 2) by using the respective location information and movement information of the computing device (10),
- checking with the computing device (10) the trajectories for conflicts that occur due to a spatial and temporal overlap of the trajectory of the first motor vehicle (1) with the trajectory of the second motor vehicle (2),
- determining with the computing device (10) a driving instruction for the first and/or the second motor vehicle (1, 2) when a conflict has been determined to exist,
- transmitting with the communication device (11) the driving instruction to the first and/or the second motor vehicle (1, 2), and
- executing the received driving instruction with the first and/or second motor vehicle (1, 2) and/or displaying the received driving instruction on a display device of the first and/or the second motor vehicle (1, 2).

2. Method according to claim 1,
**characterized by**
upon detection of the first and second motor vehicle (1, 2) by the sensors (9) of at least two of the coordination devices (4, 7) and prior to determining a driving instruction, selecting one of the coordination devices (4, 7) with the computing device (10) of at least one coordination device (4, 7) or with the control devices of the first and/or the second motor vehicle (1, 2), with only the computing device (10) of the selected coordination device (4, 7) determining the at least one driving instruction.

3. Method according to claim 2,
**characterized by**
storing motor vehicle priority information in the control device of the first and second motor vehicle (1, 2) and, depending on said motor vehicle priority information, determining the motor vehicle (1, 2) having the control device that selects the selected coordination device (4, 7).

4. Method according to claim 2 or 3,
**characterized by**
storing coordination device priority information in each of the coordination devices (4, 7), and determining the selected coordination device (4, 7) depending on said coordination device priority information.

5. Method according to any of claims 2 to 4,
**characterized by**
determining location information and movement information of the first and second motor vehicle (1, 2) with the coordination devices (4, 7) whose sensors (9) detect the first and the second motor vehicle (1, 2), and determining an expected residence time of the two motor vehicles in a detection range of the respective sensor (9), wherein the coordination device (4, 7) is selected based on the expected residence time.

6. Method according to any of claims 2 to 5,
**characterized by**
detecting with the at least one coordination device (4, 7), which is not the selected coordination device (4, 7), and its sensor (9), the first and/or the second motor vehicle (1, 2), and transmitting sensor data and/or detected location information and/or detected movement information and/or at least one calculated trajectory to the selected coordination device (4, 7).

7. Method according to any of the preceding claims, **characterized in that** the sensor (9) is an image-acquisition sensor, in particular a camera, and that the method further comprises determining the location information and/or the movement information of the first and second motor vehicle (1, 2) using an image recognition algorithm.

8. Method according to any of the preceding claims, **characterized in that** the communication device (11) is configured to receive messages from the first and second motor vehicle (1, 2).

9. Method according to claim 8,
**characterized in that**
the first and/or the second motor vehicle (1, 2) comprises a determination device for determining location data, and **in that** the method further comprises transmitting the detected location data to the coordination device (4, 7), and identifying the motor vehicle (1, 2) in the sensor information and/or determining the location information for the motor vehicle (1, 2) by using the computing device (10).

10. Method according to claim 8 or 9,
**characterized by**
transferring to the coordination device (4, 7) driving maneuvers planned by the first and/or the second motor vehicle (1, 2).

11. Method according to any of the preceding claims,
**characterized by**
determining at least two expected trajectories for the first and/or the second motor vehicle (1, 2), and determining for each of the determined trajectories a probability value describing a probability with which the respective expected trajectory will be driven.

12. Method according to claim 11,
**characterized in that**
only trajectories with a specified minimum probability are considered when determining the conflicts.

13. Method according to any of the preceding claims,
**characterized in that**
an expected time until an occurrence of a conflict is taken into account when calculating the driving instruction.

14. Coordination device,
**characterized in that**
it comprises a sensor (9), a computing device (10) and a communication device (11), and is configured to be used in a method according to any of claims 1 to 13.

15. Motor vehicle,
**characterized in that**
it comprises a coordination device (4) according to claim 14.

## Revendications

1. Procédé pour coordonner le fonctionnement d'au moins un premier et un second véhicule automobile (1, 2) à l'aide d'au moins une installation de coordination (4, 7), qui est une installation localisée d'infrastructure ou une partie d'un troisième véhicule automobile (12) et qui comprend au moins un capteur (9), un dispositif informatique (10) et un dispositif de communication (11), comprenant les étapes de :
- l'enregistrement des données de capteur avec le capteur (9) de l'installation de coordination (4, 7),
- la détermination des informations d'emplacement et de mouvement du premier et du deuxième véhicule à moteur (1, 2) en utilisant les données du capteur par le dispositif informatique (10),
- le calcul d'au moins une trajectoire attendue pour le premier et le second véhicule automobile (1, 2) en utilisant des informations respectives d'emplacement et de mouvement par le dispositif informatique (10),
- le contrôle des trajectoires à la recherche de conflits qui se produisent en raison d'un chevauchement spatial et temporel de la trajectoire du premier véhicule automobile (1) et de la trajectoire du second véhicule automobile (2) par le dispositif informatique (10),
- la détermination d'une instruction de conduite pour le premier et/ou le deuxième véhicule automobile (1, 2) par le dispositif informatique (10), si l'existence d'un conflit a été déterminé,
- la transmission de l'instruction de conduite au premier et/ou au second véhicule (1, 2) par l'intermédiaire du dispositif de communication (11), et
- l'exécution de l'instruction de conduite reçue par le premier et/ou le second véhicule automobile (1, 2) et/ou l'affichage de l'instruction de conduite reçue sur un dispositif d'affichage du premier et/ou du second véhicule automobile (1,2).

2. Procédé selon la revendication 1, **caractérisé en ce qu'**il comprend, lors d'une détection provenant du premier et du second véhicule automobile (1, 2) par les capteurs (9) d'au moins deux des installations de coordination (4, 7) dans une autre étape avant la détermination de l'instruction de conduite, la sélection d'une des installations de coordination (4, 7) par le dispositif informatique (10) d'au moins une installation de coordination (4, 7) ou par les installations de contrôle du premier et/ou du second véhicule automobile (1, 2), et la détermination d'au moins une instruction de conduite seulement par le dispositif informatique (10) de l'installation de coordination sélectionnée (4, 7).

3. Procédé selon la revendication 2, **caractérisé en ce qu'**il comprend un enregistrement à chaque fois d'une information prioritaire du véhicule automobile dans l'installation de contrôle du premier et du second véhicule automobile (1, 2) et, en tenant compte de l'information prioritaire du véhicule automobile, une détermination du véhicule automobile (1, 2) ayant une installation de contrôle qui sélectionne l'installation de coordination sélectionnée(4, 7).

4. Procédé selon la revendication 2 ou 3, **caractérisé en ce qu'**il comprend un enregistrement d'une information prioritaire de l'installation de coordination dans chacune des installations de coordination (4, 7), et une détermination de l'installation de coordination sélectionnée (4, 7) en tenant compte de l'information prioritaire de l'installation de coordination.

5. Procédé selon l'une des revendications 2 à 4, **caractérisé en ce qu'**il comprend une détermination d'une information d'emplacement et de mouvement du premier et du second véhicule automobile (1, 2) avec les deux installations de coordination (4, 7), dont les capteurs (9) détectent le premier et le second véhicule automobile (1, 2), et une détermination d'un temps de résidence escompté des deux véhicules automobiles dans un domaine de détection du capteur (9) respectif, dans lequel l'installation de coordination (4, 7) est sélectionnée en tenant compte du temps de résidence escompté.

6. Procédé selon l'une des revendications 2 à 5, **caractérisé en ce qu'**il comprend une transmission par au moins une installation de coordination (4, 7) qui n'est pas l'installation de coordination sélectionnée (4, 7) et dont le capteur (9) détecte le premier et/ou le second véhicule automobile (1, 2), à l'installation de coordination sélectionnée (4, 7) sélectionnée, de données de capteur et/ou d'informations d'emplacement déterminées et/ou d'informations de mouvement déterminées et/ou d'au moins une trajectoire calculée.

7. Procédé selon l'une des revendications précédentes, **caractérisé en ce que** le capteur (9) consiste en un capteur d'acquisition d'images, en particulier consistant en une caméra, comprenant également la détermination d'information d'emplacement et/ou de mouvement du premier et du second véhicule automobile (1, 2) en utilisant un algorithme de reconnaissance d'images.

8. Procédé selon l'une des revendications précédentes, **caractérisé en ce que** le dispositif de communication (11) est configuré pour recevoir des messages provenant du premier et du second véhicule automobile (1, 2).

9. Procédé selon la revendication 8, **caractérisé en ce que** le premier et le second véhicule automobile (1, 2) comprennent un dispositif de détermination pour déterminer des données d'emplacement, comprenant également la transmission des données d'emplacement à l'installation de coordination (4, 7) et l'identification du véhicule automobile (1, 2)par les informations du capteur et/ou la détermination de l'information d'emplacement du véhicule automobile (1, 2) en utilisant le dispositif informatique (10).

10. Procédé selon la revendication 8 ou 9, **caractérisé en ce qu'**il comprend le transfert de manoeuvres de conduite planifiées par le premier et/ou le second véhicule automobile (1, 2) à l'installation de coordination (4, 7).

11. Procédé selon l'une des revendications précédentes, **caractérisé en ce qu'**il comprend la détermination d'au moins deux trajets escomptés pour le premier et/ou le second véhicule automobile (1, 2), et la détermination pour chacune des trajectoires escomptées d'une valeur de probabilité décrivant une probabilité avec laquelle la trajectoire respective escomptée est réalisée.

12. Procédé selon la revendication 11, **caractérisé en ce que** seulement des trajectoires avec une probabilité minimale spécifiée sont considérées lorsque des conflits sont déterminés.

13. Procédé selon l'une des revendications précédentes, **caractérisé en ce qu'**un temps escompté jusqu'à une occurrence d'un conflit est pris en compte lorsqu'on calcule l'instruction de conduite.

14. Installation de coordination, **caractérisé en ce qu'**elle comprend un capteur (9), un dispositif informatique (10) et un dispositif de communication (11) et ladite installation est conçue pour l'exécution d'un procédé selon l'une des revendications 1 à 13.

15. Véhicule automobile, **caractérisé en ce qu'**il comprend une installation de coordination (4) selon la revendication 14.
